# EUROPEAN PATENT SPECIFICATION

(11) **EP 3 521 019 B1**
(45) Date of publication and mention of the grant of the patent: **29.07.2020**
(21) Application number: 19155287.6
(22) Date of filing: 04.02.2019
(51) Int. Cl.: B32B 27/08, B32B 27/30, B32B 27/32, B32B 27/34, B32B 27/36

(54) **OVENABLE THERMOFORMING FILM**
OFENTAUGLICHE THERMOFORMBARE FOLIE
FILMS THERMOFORMÉS ALLANT AU FOUR

(30) Priority: 05.02.2018 EP 18155097
(43) Date of publication of application: 07.08.2019
(73) Proprietor: Flexopack S.A., 194 00 Koropi (GR)
(72) Inventor: GINOSATIS, Dimitris, 19400 Koropi Attica (GR)
(74) Representative: Isarpatent

(56) References cited:
- EP-A1- 3 168 242
- EP-A2- 0 245 921
- EP-A2- 1 393 897
- WO-A1-2017/062778
- WO-A2-02/00430
- DATABASE WPI Week 200064 Thomson Scientific, London, GB; AN 2000-658721 XP002791568, & JP 2000 248124 A (KURARAY CO LTD) 12 September 2000 (2000-09-12)

## Description

The invention relates to a thermoformable film able to withstand cooking conditions in conventional and microwave ovens. The film comprises a sealing layer comprising ethylene vinyl alcohol (EVOH) copolymer and has a polyolefin content of less than 10% per weight.

### BACKGROUND

Plastic containers have been increasingly used in packaging applications, such as food packaging, and in particular for cook-in process of convenience foods. As an example, ready-prepared ovenable meals can be provided which can be warmed in a conventional or microwave oven. Nowadays, busy consumers are demanding higher quality products, easier-to-use packaging and faster reheating options to achieve more flexibility in the kitchen. The ability to cook food in a conventional or microwave oven is a practical necessity.

Thermoforming is a known packaging process in which a container (e.g. a tray) is formed by a plastic film in a mold by application of vacuum, air pressure or a plug under increased temperature. Then food is placed in the container and air is drawn from the packaging prior to sealing it close. Such vacuum packaging has very good storage and preservation characteristics.

Thermoforming process in general involves two packaging films
1. The top lid film which seals (often under vacuum) to the bottom film.
2. The bottom thermoformable film which is formed into a tray during the first step of the packing process and wherein the food is placed prior to the vacuum-seal step.

Cook-in packaging is packaging in which a food product is packed non-cooked or precooked. The consumer then warms or cooks the food without removing the package.

The cook-in concept is particularly desired since it avoids the need for the consumer to handle raw meat or fish, which is often undesirable. Moreover, the handling of raw meat is a growing concern from a food safety perspective while pre-packed cook-in food reduces the risk of contamination.

In case the cook-in is done in a conventional oven, the films or trays used must combine the following features
1. Enough thermal resistance not to disintegrate in the oven for a cooking process at 200°C for 1 hour.
2. The sealing of the top lid film to the bottom thermoformable film must be strong enough to avoid any leakers of unsealed areas which could be dangerous for the food integrity.
3. The oxygen barrier of both top and bottom materials must be high enough to protect the film from oxygen ingress which is detrimental to the shelf life of the product.
4. The bottom film must be easily thermoformed in a thermoforming machine.

In general, common films used in thermoforming are multilayer films incorporating different layers of polyamides, polyolefins (e.g. polyethylene and popypropylene) and optionally higher barrier materials such as EVOH. While these combinations of materials are very well performing in conventional applications, they do not have sufficient heat resistance to withstand conventional oven temperatures like 200 °C. They often disintegrate during this kind of cooking.

In the prior art several approaches have been used to increase the thermal stability of thermoforming films.

US 7,504,158 B2 describes a film comprising mostly polyamide. While this film is heat resistant, its sealing behavior is not sufficient.

Same deficiencies stand with the films described in US 2012/0213896 A1.

In the market there are films consisting of polyamide 66 that may be used in similar applications. Polyamide 66 film is not easy to be produced in conventional blown film lines, it is very stiff and extremely difficult to seal.

As already said, conventional thermoforming films often comprise EVOH. For high oxygen barrier. In order to protect it from water vapor the EVOH layer is always used in an intermediate film layer. Use of EVOH as sealing layer is not recommended and not used in the market.

### SUMMARY OF THE INVENTION

The present invention provides a thermoforming film suitable for conventional and/or microwave oven cook-in process, where the film comprises a sealing layer comprising EVOH and wherein the polyolefin content of less than 10% per weight.

### DEFINITIONS

As used herein, the term "plastic film" or simply "film" refers to a flat or tubular flexible structure of thermoplastic material.
The term "bottom film" refers to a film which is converted to a formed flexible tray during thermoforming process.
The term "top lidding film" or simply "top film refers to a film which seals to the bottom film during the thermoforming process.
The term "outer layer" refers to the film that is in immediate contact with the outside environment (atmosphere).
The term "inner layer" refers to the film that comes in contact with the product packed. It is also called "sealing layer" as this layer must be hermetically sealed in order to protect the product from ingress of air.
The term "intermediate layer" refers to any layer of the film that is neither the outer nor the inner layer. A film may comprise more than one intermediate layers.
As used herein the term "homopolymer" refers to a polymer resulting fro polymerization of single monomer.
As used herein, the term "copolymer" refers to a polymer resulting from polymerization of at least two polymers.
As used herein, the term "polymer" includes both types of homopolymers and copolymers.
As used herein, the term "polyolefin" includes all the products produced by polymerization of olefins. Polyethylene and polypropylene homopolymers and copolymers are the most common polyolefins.
As used herein, the term "polyethylene" identifies polymers comprising basically ethylene repeating units. Polyethylene homopolymers may be HDPE (high-density polyethylene) or LDPE (low-density polyethylene) as well known in the art.
As used herein the term "ethylene alpha olefin copolymers" refers to copolymers of ethylene with butene, hexene, octene or other alkenes. Such polymers are linear low-density polyethylene (LLDPE), medium density polyethylene(MDPE), very-low density polyethylene (VLDPE), ultra-low density polyethylene (ULDPE), metallocene catalyzed polyethylene and polyethylene plastomers and elastomers.
In the scope of the present application, the term "copolymer" may include the maleic anhydride modified polymers, often used as adhesives to bond dissimilar materials.
As used herein the term "homogeneous ethylene alpha olefin copolymers" refers to ethylene alpha olefin copolymers having a molecular weight distribution of less than 2.7 as measured by GPC.
As used herein the term "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers and the like.
As used herein the term "ethylene methacrylate copolymers" refers to polymers of ethylene and methacrylate. EMA is abbreviation for this polymer.
As used herein the term "ethylene vinyl acetate copolymers" refers to polymers of ethylene and vinyl acetate. EVA is abbreviation for this polymer.
As used herein the term "ethylene vinyl alcohol" or EVOH refers to saponified products of ethylene vinyl acetate polymers. The ethylene content is preferably in the range of 22 to 50 % per mol.
As used herein the term PVDC refers to vinylidene chloride copolymer wherein a major amount of the copolymer comprises vinylidene chloride and a minor amount of the copolymer comprises one or more monomers such as vinyl chloride and or/alkyl acrylates and methacrylates.
As used herein the term "polyamide" refers to well-known polymers such as polyamide 6, polyamide 66, polyamide 610, polyamide 6/66, polyamide 6/12, polyamide 11, polyamide 12, polyamide 6/66/12, polyamide 6/66/11, amorphous polyamides, aromatic polyamides and others.
As used herein, the term "ionomer" refers to ethylene-acid copolymers which have been neutralized by meals such as sodium, zinc, lithium or others. The acid used is usually methacrylic or acrylic acid.
As used herein the term "ethylene acid copolymer" refers to copolymers of ethylene with acid, most usually methacrylic or acrylic acid.
As used herein, the term "polyester" includes polymers such as PET (polyethylene terephthalate) in amorphous, semi crystalline or crystalline state, PETG (glycol modified polyethylene terephthalate), PBT (polybutylene terephthalate, PTT (polytrimethylene terephthalate), PBN (polybutylene naphthalate), PEN (polyethylene naphthalate), polyester block copolymers and others.
As used herein the term "polybutylene" refers to butene-1 homopolymers and copolymers.
As used herein the term "cycloolefin copolymers" refers to copolymers of olefins with cyclic monomers such as norbornene.
As used herein the term "hot blown film" refers to a film production process where the film is oriented from the melt state. The hot blown film may be cooled by air, water or other cooling media. Tubular dies as well known in the art are used for this process as opposed to cast production process.

Unless otherwise indicated, all percentages described herein, are percentages by weight.

### DETAILED DESCRIPTION OF THE INVENTION

The film of the present invention comprises a sealing layer which comprises EVOH copolymer.

Preferably the film comprises at least one more layer which comprises EVOH or polyamide.

The film comprises less than 10 % polyolefins per weight. Preferably it comprises less than 5 % polyolefins per weight.

Preferably the film is produced by the hot blown film method.

Preferably the film is of the structure
OUTER LAYER/INTERMEDIATE LAYER/SEALING LAYER
Or
OUTER LAYER/INTERMEDIATE LAYER1/INTERMEDIATE LAYER 2/INTERMEDIATE LAYER 3/SEALING LAYER
Or
it is e.g. of a more than 5-layer configuration, including more than 3 intermediate layers.

The film of the present invention may be of thickness from 10 to 300 microns, preferably 50 to 200 microns.

### Sealing layer

The sealing layer comprises EVOH copolymers.

The EVOH comprises preferably 22 to 50 % ethylene per mol. By increasing the ethylene content the sealing strength increases but the material due to the reduction of melting point becomes more prone to thermal disintegration in a prolonged oven process. In the area of 30 to 44 % ethylene content per mol the sealing strength/thermal resistance is optimized.

Well known EVOH in the market as sold as EVAL from Kuraray, SOARNOL from Nippon Gohsei and EVASIN from Chang Chun Petrochemicals.

In a further preferable version the EVOH is blended with
*an elastomer (e.g. a styrenic elastomer) and/or
*a flexible polyamide (e.g. polyamide 6/12) and/or
*an ionomer and/or
*an EVA and/or
*a saponified EVA

Also a blend of different EVOH with different ethylene contents is possible in order to optimize sealing and heat resistant properties.

An EVOH with melt flow index from 0.5 to 10 measured at 190 °C, 2.16 kg as per ASTM 1238 is preferred according to the scope of the invention.

The applicant has surprisingly noticed that EVOH can be efficiently used as a sealing layer for the purpose of the invention.

### Intermediate layers

The film preferably comprises an intermediate layer comprising polyamide.

The polyamide is preferably selected from group of polyamide 6, polyamide 66, polyamide 6/66, polyamide6/12, polyamide 610, polyamide 612, polyamide 6/66/12, polyamide 11, polyamide 12, polyamide 6/69, polyamide 66/610, polyamide 6I/6T, MXD polyamide, polyamide 6/66/11 and polyamide 6/6l.

In general, for the sealing it is advantageous the polyamide to have a comparatively low modulus (e.g. less than 800MPA in dry conditions as measured by ASTM D882) and a melting point of less than 210 °C. This helps process the film easier as the film is less stiff.

The intermediate layers may also comprise
*EVOH as per the need to increase further the oxygen barrier of the film
*polyolefins, but keeping the per weight percentage as low as possible to avoid thermal disintegration.
*polyesters
*amorphous materials with glass transition temperatures of more than 100 °C.

### Outer layer

The film preferably comprises an outer layer.

The outer layer of the film preferably comprises a polyamide and/or a polyester.

In a preferred embodiment, the polyamide can be a polyamide with a melting point higher than 200 °C and/or a polyamide with a melting point lower than 200 °C.

### EXAMPLES

In a commercial blown film line, the following plastic films were produced

### Example 1

Outer layer, Ultramid B40LN, thickness 20 microns
Intermediate layer 1, EVAL E171 B, thickness 5 microns
Intermediate layer 2, Ultramid C40L, 20 microns,
Intermediate layer 3, UBE 5034FDX40, 10 microns
Sealing layer, EVAL H171B, 20 microns

Ultramid B40LN is a polyamide 6 from BASF.
Ultramid C40L is a copolyamide 6/66 from BASF.
EVAL E171 B is an 44 % per mol ethylene EVOH from Kuraray.
EVAL H171 B is a 38 % per mol ethylene EVOH from Kuraray.
5034FDX40 is a 6/66 copolyamide from UBE.

Production of the film was stable with no processing issues.

### Example 2

Outer layer, 90 % by weight Ultramid B40LN + 10 % by weight Grivory G21, thickness 35 microns
Intermediate layer 1, EVAL E171 B, thickness 5 microns
Intermediate layer 2, Ultramid C40L, 25 microns,
Intermediate layer 3, UBE 5034FDX40, 10 microns
Sealing layer, EVAL H171B, 30 microns

Grivory G21 is an amorphous 6I/6T copolyamide from EMS.

### Example 3

The Film structure of example 3 was same as example 1 but in the sealing layer the material was changed to a blend of 90 % by weight EVAL H171B + 10 % by weight AM7927
Where AM 7927 is a nylon modified ionomer from Dupont.

### Example 4

Film structure of example 4 was same as example 1 but in the sealing layer the material was changed to a blend of 90 % by weight EVAL H171B + 10 % by weight GRILON CF6S

Where Grilon CF6S is a 6/12 polyamide from EMS.

Examples 3 and 4 had an improved processing compared to example1.

### EVALUATION OF EXAMPLES

The above examples were tested at a commercial thermoforming machines. Examples 1,3,4 are the top lid films while example 2 is the thermoformable bottom web.

### 1. Evaluation of thermoformability of film 2.

Thermoformability of film 2 was compared under same conditions (same mold, same heating and forming time, same forming temperature) with the thermoformability of FLEXO-FRESH HB 110, a multilayer PA/PE film used for thermoforming.

It was surprisingly found out that the film of the current invention was able to thermoform in a nice manner similar to the commercial film , having also certain advantages. For example, the puncture properties at the edges of the film (at the corners-areas where the thickness of the film is min after thermoforming) were better compared to the commercial film.

### 2. Evaluation of sealing

At sealing temperature 180 °C and sealing time 2 seconds different packs were prepared as of below;
Pack 1= top film as per example 1 and bottom as per example 2
Pack 2= top film as per example 3 and bottom as per example 2
Pack 3= top film as per example 4 and bottom as per example 2

Sealing strength was measured in Instron machine per 15mm according to ASTM F88.

Seal strength of pack 1 was average 9 N / 15 mm while of pack 2 was 14 N / 15 mm and of pack 3 was 15 N / 15 mm. There were no leakages and unsealed areas.

The level of sealing strength of 9 to 15 N is suitable for the application in the sense that the seal "pops" during the cook-in in the oven thus allowing the steam from inside the pack to escape without rupturing the pack.

### 3. Real oven cook-in test

250 grams of pork meat was packed in five different packs of each Pack 1, 2 and 3.

Then the packs were placed one after the other in a conventional kitchen oven and the food was cooked by setting the oven temperature at 200 °C and removing the packs after 1 hour.

By examining the film, it was noticed that there was no melting, thermal deterioration or degradation of the film.

## Claims

1. A plastic film comprising a sealing layer comprising EVOH and wherein the polyolefin content of the film is less than 10% per weight.

2. The plastic film according to claim 1, comprising a second layer comprising polyamide.

3. The plastic film according to claim 1, wherein the film comprises a second layer comprising polyester.

4. The plastic film according to one of the preceding claims, wherein the ethylene content of the EVOH is between 22 and 50 % per mol.

5. The plastic film according to one of the preceding claims, wherein the EVOH is blended to
an elastomer, preferably a styrenic elastomer and/or
a flexible polyamide, preferably a polyamide 6/12 and/or
an ionomer and/or
an EVA and/or
a saponified EVA.

6. Use of a plastic film according to one of the preceding claims, as a top lid and/or bottom film for a packaging.

7. Packaging, comprising a plastic film according claims 1 to 5 as a top lid and/or bottom film.

8. A thermoforming process where a plastic film according claims 1 to 5 is used as a top lid and/or bottom film for a packaging.

## Patentansprüche

1. Kunststofffolie, umfassend eine Siegelschicht, die EVOH umfasst und bei der der Polyolefingehalt der Folie weniger als 10 Gew.-% beträgt.

2. Kunststofffolie nach Anspruch 1, umfassend eine zweite Schicht, die Polyamid umfasst.

3. Kunststofffolie nach Anspruch 1, wobei die Folie eine zweite Schicht umfasst, die Polyester umfasst.

4. Kunststofffolie nach einem der vorstehenden Ansprüche, wobei der Ethylengehalt des EVOH zwischen 22 und 50 Mol-% liegt.

5. Kunststofffolie nach einem der vorhergehenden Ansprüche, wobei das EVOH gemischt ist mit
einem Elastomer, vorzugsweise einem Styrol-Elastomer und/oder
einem flexiblen Polyamid, vorzugsweise einem Polyamid 6/12 und/oder
einem lonomer und/oder
einem EVA und/oder
einem verseifte EVA.

6. Verwendung einer Kunststofffolie nach einem der vorstehenden Ansprüche als Deck- und/oder Bodenfolie für eine Verpackung.

7. Verpackung, bestehend aus einer Kunststofffolie nach den Ansprüchen 1 bis 5 als Deck- und/oder Bodenfolie für eine Verpackung.

8. Thermoformverfahren, bei dem eine Kunststofffolie nach einem der Ansprüche 1 bis 5 als Deck- und/oder Bodenfolie für eine Verpackung verwendet wird.

## Revendications

1. Film plastique comprenant une couche d'étanchéité comprenant un copolymère éthylène-alcool vinylique EVOH et dans lequel la teneur en polyoléfine du film est inférieure à 10 % en poids.

2. Film plastique selon la revendication 1, comprenant une seconde couche comprenant du polyamide.

3. Film plastique selon la revendication 1, ledit film comprenant une seconde couche comprenant du polyester.

4. Film plastique selon l'une des revendications précédentes, dans lequel la teneur en éthylène du copolymère EVOH est entre 22 et 50 % par mole.

5. Film plastique selon l'une des revendications précédentes, dans lequel le copolymère EVOH est mélangé à
un élastomère, de préférence un élastomère styrénique et/ou un polyamide souple, de préférence, un polyamide 6/12, et/ou un ionomère, et/ou
un copolymère d'éthylène-acétate de vinyle EVA, et/ou un copolymère EVA saponifié.

6. Utilisation d'un film plastique selon l'une des revendications précédentes, en tant que couvercle supérieur et/ou film inférieur pour un emballage.

7. Emballage, comprenant un film plastique selon les revendications 1 à 5 en tant que couvercle supérieur et/ou film inférieur.

8. Procédé de thermoformage, dans lequel un film plastique selon les revendications 1 à 5 est utilisé en tant que couvercle supérieur et/ou film inférieur pour un emballage.
